# EUROPÄISCHE PATENTSCHRIFT

(11) **EP 1 166 650 B1**
(45) Veröffentlichungstag und Bekanntmachung des Hinweises auf die Patenterteilung: **07.09.2005**
(21) Anmeldenummer: 01112053.2
(22) Anmeldetag: 25.05.2001
(51) Int. Cl.: A23L 1/226

(54) **Käsearoma**
Cheese flavor
Arôme de fromage

(30) Priorität: 07.06.2000 DE 10028225
(43) Veröffentlichungstag der Anmeldung: 02.01.2002
(73) Patentinhaber: Symrise GmbH & Co. KG, 37603 Holzminden (DE)
(72) Erfinder: Krammer, Gerhard, Dr., 37603 Holzminden (DE); Werkhoff, Peter, Dr., 37671 Höxter (DE); Hansmann, Günther, 37603 Holzminden (DE); Hilmer, Silke, 37671 Höxter (DE)
(74) Vertreter: Eisenführ, Speiser & Partner

(56) Entgegenhaltungen:
- EP-A- 0 074 140
- GB-A- 1 381 737
- US-A- 3 865 952
- US-A- 3 904 780
- US-A- 3 911 158
- US-A- 3 978 242

## Beschreibung

Die Erfindung betrifft ein System einzelner Komponenten, die das Geschmackserlebnis "Käse" in den einzelnen Richtungen hervorrufen, ihre Verwendung zum Aromatisieren verschiedener Lebensmittel und Genussmittel und ihre Herstellung.

Das Geschmackserlebnis "Käse" setzt sich aus verschiedenen flüchtigen und nicht-flüchtigen Komponenten zusammen, die bei der Herstellung des Käses aus Milch entstehen. Darüberhinaus werden geschmacksrelevante Zutaten, wie z.B. Kochsalz, bei der Käseherstellung verwendet.

Das Geschmackserlebnis "Käse" im Rahmen der Erfindung entspricht der organoleptischen Wahrnehmung wie bei Zubereitungen, in denen die Herstellung des Käses durch Abscheiden fester Bestandteile aus der Milch erfolgt, die im Wesentlichen aus einem Gemenge aus Eiweiß (Kasein), Milchfett und Salzen bestehen und die durch Bakterien und Schimmelpilzen einem Reifeprozess unterworfen werden. Bei dem Reifeprozess entstehen sortentypisch die den Käsegeschmack bestimmenden Komponenten.

Einzelne geruchs- und geschmacksaktive Komponenten wurden bereits mit Hilfe von Modellsystemen hinsichtlich ihrer Bedeutung für Käsearoma evaluiert (Z. Lebensm. unter S. Forsch. (1996) 202: 30-34; Int. Dairy Journal 7 (1997) 65-70). In Z. Lebensm. unter S. Forsch. (1996) 202: 30-34 werden als flüchtige Bestandteile (geruchsaktive Komponenten) von Schweizer Käse die Verbindung 3-Methylbutanal, Buttersäureethylester, 3-Methylbuttersäureethylester, Hexansäureethylester, Methional, 4-Hydroxy-2,5-dimethyl-3(2H)-furanon, 5-Ethyl-4-hydroxy-2-methyl-3(2H)-furanon und δ-Decalacton und als nicht-flüchtige Komponenten (geschmacksaktive Verbindungen) die Verbindungen Essigsäure, Propionsäure, Buttersäure, Ammoniumhydroxid, Milchsäure, Glutaminsäure, Natriumchlorid, Natriumdihydrogenphosphat, Kaliumdihydrogenphosphat, Calciumhydroxid, Magnesiumhydroxid, Natriumhydroxid, Histamin, 3-Methylbuttersäure, Hexansäure, Octansäure, Decansäure und Laurinsäure genannt.

GB 1 381 737 offenbart komplexe Käsearomamischungen vom Cheddar und Blue-cheese Typ.

Lebensmittel, die das Geschmackserlebnis "Käse" beim Verzehr vermitteln, werden z. Z. u.a. aus natürlichem Käse, Milchfettprodukten, Enzyme modified cheese (EMC), Hefe-Extrakt und flüchtigen Aromastoffen hergestellt.

Es ist also bekannt, dass "Käse" aus verschiedenen Komponenten besteht, die einen Beitrag zu dem Käsearoma leisten, während andere Komponenten einen Nahrungs-und/oder Füllfunktion haben. Bei der Herstellung von Lebensmitteln konnten die einzelnen Komponenten nicht unabhängig voneinander eingesetzt werden. Darüberhinaus waren die Mengen und die notwendigen Kombinationen aller aromarelevanten Stoffe nicht bekannt.

Aufgabe der vorliegenden Erfindung war die Bereitstellung von Käsearoma aus Komponenten, die einen Beitrag zum Geschmackserlebnis "Käse" leisten.

Zur Lösung der Aufgabe wurden die flüchtigen und die nicht-flüchtigen Komponenten in folgende Gruppen eingeteilt:

| | | |
|---|---|---|
| Aromaeigenschaften | Gruppe 1 | säuerliche Noten, Essigsäure-ähnliche Noten |
| | Gruppe 2 | Milch-artige, cremige Noten, Sahne-artige, karamel-artige Noten |
| | Gruppe 3 | Fruchtige, blumige Noten |
| | Gruppe 4 | scharfe Noten, Blauschimmel-Noten, Rinden-Noten |
| | Gruppe 5 | Fett-artige Noten |
| | Gruppe 6 | animalische Noten |
| | Gruppe 7 | röstige Noten und Kakao-ähnliche Noten, rauchige Noten |
| | Gruppe 8 | Gemüse-ähnliche Noten |
| | Gruppe 9 | Pilz-ähnliche Noten, Weichkäse-ähnliche Noten |
| Geschmackseigenschaften | Gruppe 10 | Geschmackserlebnis salzig |
| | Gruppe 11 | Geschmackserlebnis sauer |
| | Gruppe 12 | Adstringierende, bittere Noten |
| | Gruppe 13 | Geschmackserlebnis süß |
| | Gruppe 14 | Geschmackserlebnis Umami, Glutamat-artig |

Es wurde Käsearoma gefunden, enthaltend an flüchtigen Komponenten 5 bis 200 Gew.-Teile an Verbindungen mit säuerlichen und Essigsäure-ähnlichen Noten (Gruppe 1), 0,1 bis 10,0 Gew.-Teile an Verbindungen mit milchartigen und cremigen Noten oder sahneartigen oder karamelartigen Noten (Gruppe 2), 0,03 bis 6,0 Gew.-Teile an Verbindungen mit fruchtigen und blumigen Noten (Gruppe 3), 0,01 bis 15,0 Gew.-Teile an Verbindungen mit scharfen Noten, Blauschimmel-Noten und Rinden-Noten (Gruppe 4), 0,003 bis 15,0 Gew.-Teile an Verbindungen mit fettartigen Noten (Gruppe 5), 0 bis 0,05 Gew.-Teile an Verbindungen mit animalischen Noten (Gruppe 6), 0,0003 bis 0,6 Gew.-Teile an Verbindungen mit röstigen Noten und kakaoähnlichen Noten auch rauchigen Noten (Gruppe 7), 0,00005 bis 0,1 Gew.-Teile an Verbindungen mit gemüseähnlichen Noten (Gruppe 8), 0 bis 0,1 Gew.-Teile an pilzähnlichen Noten oder Weichkäse-ähnlichen Noten (Gruppe 9) und an nicht-flüchtigen Komponenten 100 bis 480 Gew.-Teile an Verbindungen mit dem Geschmackseindruck salzig (Gruppe 10), 50 bis 550 Gew.-Teile an Verbindungen mit dem Geschmackseindruck sauer (Gruppe 11), 5 bis 200 Gew.-Teile an Verbindungen mit adstringierenden, bitteren Noten (Gruppe 12), 0 bis 100 Gew.-Teile an Verbindungen mit dem Geschmackseindruck süß (Gruppe 13) und 0 bis 140 Gew.-Teile an Verbindungen mit einem Glutamat-artigen Geschmackseindruck (Umami) (Gruppe 14).

Die Stoffe der Gruppen 1 bis 9 werden zur Herstellung der Vormischung A eingesetzt. Die Stoffe der Gruppen 10 bis 14 werden zur Herstellung der Vormischung B eingesetzt.

"Käsearoma" im Rahmen der vorliegenden Erfindung vermittelt beim Genuss das Geschmackserlebnis "Käse".

Die einzelnen Gruppen als Bestandteil des erfindungsgemäßen Käsearomas werden wie folgt beschrieben:

Als Verbindungen der Gruppe 1 mit säuerlichen Noten und Essigsäure-ähnliche Noten seien beispielsweise Carbonsäuren mit 2 bis 16 Kohlenstoffatomen genannt. Bevorzugte Verbindungen der Gruppe 1 sind Essigsäure, Propionsäure, Buttersäure, Valeriansäure, Caprylsäure, Capronsäure, Caprinsäure, Laurinsäure und Myristinsäure.

Als Verbindungen der Gruppe 2 mit dem milchartigen und cremigen Noten seien gesättigte und ungesättigte δ-und γ-Lactone mit 6 bis 14 Kohlenstoffatomen genannt. Bevorzugte Verbindungen dieser Gruppe sind Jasminlacton, δ-Decalacton, δ-Octalacton, δ-Undecalacton, δ-Dodecalacton und δ-Tetradecalacton sowie γ-Caprolacton, γ-Heptalacton, γ-Octalacton, γ-Decalacton und γ-Dodecalacton genannt. Zusätzlich sind Hydroxyketone und Diketone mit 4 bis 8 Kohlenstoffatomen von Bedeutung. Bevorzugte Verbindungen sind Acetoin und Diacetyl. Zu der Gruppe 2 mit milchartigen cremigen Noten gehören auch Verbindungen mit karamelartiger Note. Bevorzugte Verbindungen sind 4-Hydroxy-2,5-dimethyl-3(2H)-furanone und 5-Ethyl-4-hydroxy-2-methyl-3(2H)-füranon. Weiter sind als Verbindungen der Gruppe 2 mit milchartigen und cremigen Noten aromatische Aldehyde genannt. Bevorzugte Verbindungen der Gruppe 2 sind Vanillin und Vanillin-Derivate.

Als Verbindungen der Gruppe 3 mit fruchtigen und blumigen Noten seien die Ethyl-, Propyl- und Butyl-Ester von geradkettigen und verzweigten Carbonsäuren mit 2 bis 12 Kohlenstoffatomen genannt. Bevorzugte Verbindungen der Gruppe 3 sind Ethylpropionat, Ethylbutyrat, Ethylcaprylat, Ethylcaprinat, Ethylcapronat, Ethylisobutyrat, Ethylisovalerianat sowie Propylcaprylat und Butylacetat. Zu der Gruppe von Verbindungen mit blumigen Noten gehören auch gesättigte, ungesättigte, geradkettige und verzweigte Alkohole und Aldehyde. Bevorzugte Verbindungen sind 2-Pentanol, Isoamylalkohol, Hexanol, 2-Methylbuttersäuremethylester, 3-Methyl-2-butenol und 2-Phenylethylalkohol. Bevorzugte Aldehyde sind Benzaldehyd, Phenylacetaldehyd und (E)-2-Phenylbutenal.

Als Verbindung der Gruppe 4 mit scharfen Noten, Blauschimmel-Noten und Rinden-noten seien 2-Alkanone und 2-Alkanole mit 5 bis 12 Kohlenstoffatomen genannt. Bevorzugte Verbindungen der Gruppe 4 sind 2-Pentanon, 2-Heptanon, 2-Octanon, 2-Decanon und 2-Nonanon. Bevorzugte 2-Alkanole sind 2-Heptanol und 2-Nonanol.

Als Verbindungen der Gruppe 5 mit fettartigen und cremigen Noten seien unverzweigte, aliphatische Aldehyde und Alkohole mit 7 bis 14 Kohlenstoffatomen genannt. Bevorzugte Verbindungen der Gruppe 5 sind Heptanal, Nonanal, Undecanal, Dodecanal und Tridecanal. Weitere bevorzugte Verbindungen sind Heptanol, Octanol und Nonanol. Zusätzlich seien als Verbindungen mit fettartigen und cremigen Noten der Gruppe 5 ungesättigte Aldehyde mit 8 bis 15 Kohlenstoffatomen genannt. Bevorzugte Verbindungen sind (E)-2-Nonenal, (E)-2-Decenal und (E)-2-Undecenal. Weitere Verbindungen dieser Gruppe sind 2-Alkanone mit 6 bis 16 Kohlenstoffatomen, bevorzugt 2-Heptanon, 2-Nonanon, 2-Undecanon, 2-Tridecanon und 2-Pentadecanon. Ferner seien als Verbindungen der Gruppe 5 die Ester langkettiger, unverzweigter Fettsäuren genannt. Bevorzugte Verbindungen sind die Ethylester langkettiger Fettsäuren wie Ethyllaurat.

Als Verbindungen der Gruppe 6 mit animalischen Noten seien Stickstoffverbindungen, bevorzugt Skatol und Indol, Schwefelverbindungen, bevorzugt Schwefelwasserstoff und Methylmercaptan, und verzweigte Fettsäuren, bevorzugt 4-Methyloctansäure, 4-Methylnonansäure und 4-Ethyloctansäure genannt.

Als Verbindungen der Gruppe 7 mit röstigen Noten seien ein- oder mehrfach (einbis dreifach) Niederalkyl-substituierte Pyrazine genannt. Bevorzugte Verbindungen der Gruppe 7 ist 2,3,5-Trimethylpyrazin und 2,6-Dimethylpyrazin. Weitere Verbindungen der Gruppe 7 mit röstigen, kakaoähnlichen Noten sind verzweigte Aldehyde mit 4 und 5 Kohlenstoffatomen. Bevorzugte Verbindung ist hier Isovaleraldehyd. Weitere Verbindungen der Gruppe 7 mit röstigen, rauchähnlichen Noten sind Phenole und Alkylfurane, bevorzugt para- und ortho-Kresol.

Als Verbindung der Gruppe 8 mit gemüseähnlichen Noten seien Niederalkyl-substituierte Thioverbindungen (1 bis 4 Kohlenstoffatomen), Thiole und Thioaldehyde genannt. Bevorzugte Verbindungen sind Methanthiol, Dimethylsulfid, Dimethyldisulfid, Dimethyltrisulfid und 3-Methylthiopropanal.

Als Verbindungen der Gruppe 9 mit pilzähnlichen und Weichkäse-ähnlichen Noten seien gesättigte und ungesättigte Alkohole und Ketone mit 8 Kohlenstoffatomen genannt. Bevorzugte Verbindungen der Gruppe 9 sind 3-Octanol, 1-Octen-3-on und 1-Octen-3-ol.

Als Verbindungen der Gruppe 10, die Geschmackseindruck "salzig" vermitteln, sind Salze mit den Kationen Natrium, Ammonium, Kalium, Magnesium und Calcium und Anionen wie Chlorid, Hydrogenphosphat, Dihydrogenphosphat, Acetat und Sulfat. Bevorzugte Verbindungen der Gruppe 10 sind Natriumchlorid, Calciumchloriddihydrat, Magnesiumchlorid, Ammoniumchlorid, Natriumdihydrogenphosphat, Kaliumdihydrogenphosphat, Ammoniumacetat, Ammoniumsulfat und Diammoniumhydrogenphosphat genannt.

Als Verbindungen der Gruppe 11, die saure Geschmackseigenschaften vermitteln, seien Mono-, Di- und Tricarbonsäuren mit 2 bis 8 Kohlenstoffatomen genannt. Bevorzugte Verbindungen der Gruppe 11 sind Milchsäure, Zitronensäure, Bernsteinsäure, Brenztraubensäure, Orotsäure, Fumarsäure, Adipinsäure und Pyroglutaminsäure. Weitere Verbindungen der Gruppe 11 mit säuerlichem Geschmack sind Aminosäuren, vorzugsweise L-Asparaginsäure, L-Glutaminsäure und L-Asparagin. Weitere Verbindungen mit säuerlichem Geschmack aus der Gruppe 11 sind Peptide, vorzugsweise Peptide bestehend aus den Aminosäuren Glycin-Asparagin, Glycin-Glutamin, Alanin-Asparagin, Alanin-Glutamin, Serin-Asparagin, Serin-Glutamin, Valin-Asparagin, Valin-Glutamin, Asparagin-Alanin, Asparagin-Asparagin, Glutamin-Alanin, Glutamin-Asparagin, Glutamin-Glutamin, Phenylalanin-Asparagin, Phenylalanin-Glutamin, Glycin-Asparagin-Serin-Glycin, Prolin-Glycin-Glycin-Glutamin und Valin-Valin-Glutamin.

Zur Anpassung des Geschmackseindrucks "sauer" kann zu den Verbindungen der Gruppe 11 anorganische Hydroxide, vorzugsweise Natriumhydroxid, Magnesiumhydroxid und Caiciumhydroxid, eingesetzt werden.

Als Verbindungen der Gruppe 12, die adstringierende und bittere Geschmackseigenschaften vermitteln sind L-Aminosäuren, vorzugsweise L-Histidin, L-Methionin, L-Valin, L-Arginin, L-Isoleucin, L-Phenylalanin, L-Tryptophan, L-Leucin, L-Glutamin und L-Tyrosin genannt. Weitere Verbindungen der Gruppe 12 sind Peptide, vorzugsweise aus den Aminosäuren Glycin-Leucin, Leucin-Phenylalanin, Leucin-Lysin, Arginin-Leucin, Arginin-Leucin-Leucin, Serin-Lysin-Glycin-Leucin, Pyroglutamin-Glycin-Serin-Alanin-Isoleucin-Phenylalanin-Valin-Leucin, Tyrosin, Phenylalanin-Leucin, Phenylalanin-Leucin, Alanin-Isocleucin-Alanin, Alanin-Alanin-Leucin, Glycin-Alanin-Leucin, Leucin-Glutamin-Leucin-Leucin-Glutamin-Leucin, Leucin-Valin-Leucin, Leucin-Prolin-Phenylalanin-Asparagin-Glycin-Leucin, Leucin-Prolin-Phenylanalin-Serin-Glycin-Leucin, Alanin-Glycin-Tyrosin-Glycin-Serin-Leucin-Valin-Tyrosin-Prolin-Phenylalanin-Prolin-Glycin-Prolin-Isoleucin-Prolin-Asparagin-Serin-Leucin-Prolin-Glutamin-Asparagin-Isoleucin-Prolin-Prolin-Leucin-Tyrosin-Glutamin, Glycin-Prolin-Phenylalanin-Prolin-Valin-Isoleucin, Phenylalanin-Phenylalanin-Valin-Alanin-Prolin-Prolin-Glutamin-Valin-Phenylalanin-Glycin-Lysin, Argenin-Glycin-Prolin-Prolin-Phenylalanin-Isoleucin-Valin, Valin-Tyrosin-Prolin-Phenylalanin-Prolin-Prolin-Glycin-Isoleucin-Argenin-Histidin und Cyclo-Leucin-Tyrosin-Leucin-Tyrosin. Weiter sind als Verbindungen der Gruppe 12 mit adstringierenden bzw. bittere Geschmackseigenschaften ungesättigte Fettsäuren mit 16 bis 22 Kohlenstoffatomen genannt. Eine bevorzugte Verbindungen der Gruppe 12 sind Ölsäure und Linolsäure.

Als Verbindungen der Gruppe 13, die süße Geschmackseigenschaften vermitteln, sind Kohlenhydrate, vorzugsweise Glukose, Fructose, Lactose und Saccharose wie L-Aminosäuren, vorzugsweise L-Alanin, L-Glycin, L-Serin, L-Threonin, L-Lysin, L-Prolin genannt.

Als Verbindungen der Gruppe 14 mit Umami-ähnlichen Geschmackseigenschaften sind L-Aminosäuren, vorzugsweise Natriumglutamat, Natriumaspartat genannt. Weitere Verbindungen mit Umami-ähnlichen Geschmack sind Peptide auf Basis der Aminosäuren Glutamin-Glutamin, Glutamin-Asparagin, Threonin-Glutamin, Glutamin-Serin, Glutamin-Glycin-Serin, Serin-Glutamin-Glutamin, Glutamin-Glutamin-Glutamin, Glutamin, Asparagin-Glutamin.

Darüber hinaus wurde gefunden, dass die Vermengung einzelner Verbindungen mit Hefeextrakt und/oder Milchfett- und Pflanzenfett-Produkten in den Anwendungsformen Dauerbackwaren, Kräcker und Käsesaucen und auch Brotaufstrichmassen, einen Käsegeschmack mit abgerundeten Noten und besonderer Mundfülle ergibt. Dies gilt auch bei Anwendungen dieser Verbindungen der Gruppen mit Hefeextrakt und/oder Milchfett- und Pflanzenfettprodukten auch in extrudierten Lebensmitteln.

Die Auswahl der einzelnen Gruppen und Einzelverbindungen für verschiedene Käsetypen erfolgt durch qualitative und quantitative Analysen von einzelnen Käsesorten nach an sich bekannten Verfahren der Lebensmittelanalyse (Z. Lebensm. Unters. Forsch. (1996) 202: 30-34). Ein bevorzugtes Auswahlverfahren wird wie folgt beschrieben:
Die Konzentrationen von geruchsaktiven Stoffen und geschmacksaktiven Stoffen in Käsesorten werden mit Hilfe von lebensmittelchemischen Analysenmethoden bestimmt. Die Auswahl der Stoffe, die für das Käsearoma wichtig sind, erfolgt durch die Bestimmung der sogenannten Odor Activity Values (OAV) und Taste Activity Values (TAV) (Z. Lebensm. Unters. Forsch., 1996, 203:230-235). OAV- und TAV-Daten werden durch den Quotienten aus der jeweiligen Konzentration einer Verbindung und dem entsprechenden Schwellenwert in einer relvanten Matrix oder Wasser erhalten. Alle Substanzen mit OAV- bzw. TAV-Werten, die größer als 1 sind, werden für die Erstellung von Modellmischungen berücksichtigt. Mit Hilfe eines speziellen Modellsystemes auf Kohlenhydrat- und Pflanzenfettbasis wird überprüft, welche Substanzen für die Herstellung des erfindungsgemäßen Käsearomas notwendig sind. Darüber hinaus wird mit Hilfe dieses Modellsystemes eine Mengenanpassung mit flavoristischen Methoden vorgenommen.

Insbesondere bevorzugt wird Käsearoma mit der Geschmacksrichtung "Cheddar" mit folgender Zusammensetzung. Käsearoma "Cheddar" nach Anspruch 1, enthaltend an flüchtigen Komponenten 20 bis 200 Gew.-Teile an Verbindungen mit säuerlichen und Essigsäure-ähnlichen Noten (Gruppe 1), 0,5 bis 10 Gew.-Teile an Verbindungen mit milchartigen und cremigen Noten oder sahneartigen oder karamelartigen Noten (Gruppe 2), 0,1 bis 2,0 Gew.-Teile an Verbindungen mit fruchtigen und blumigen Noten (Gruppe 3), 0,05 bis 0,8 Gew.-Teile an Verbindungen mit scharfen Noten, Blauschimmel-Noten und Rinden-Noten (Gruppe 4), 0,04 bis 1,0 Gew.-Teile an Verbindungen mit fettartigen Noten (Gruppe 5), 0,0001 bis 0,005 Gew.-Teile an Verbindungen mit animalischen Noten (Gruppe 6), 0,002 bis 0,2 Gew.-Teile an Verbindungen mit röstigen Noten und kakaoähnlichen Noten auch rauchigen Noten (Gruppe 7), 0,001 bis 0,06 Gew.-Teile an Verbindungen mit gemüseähnlichen Noten (Gruppe 8), 0,001 bis 0,08 Gew.-Teile an pilzähnlichen Noten oder Weichkäse-ähnlichen Noten (Gruppe 9) und an nicht-flüchtigen Komponenten 100 bis 350 Gew.-Teile an Verbindungen mit dem Geschmackseindruck salzig (Gruppe 10), 80 bis 280 Gew.-Teile an Verbindungen mit dem Geschmackseindruck sauer (Gruppe 11), 5 bis 40 Gew.-Teile an Verbindungen mit adstringierenden, bitteren Noten (Gruppe 12), 0 bis 50 Gew.-Teile an Verbindungen mit dem Geschmackseindruck süß (Gruppe 13) und 0 bis 80 Gew.-Teile an Verbindungen mit einem Glutamat-artigen Geschmackseindruck (Umami) (Gruppe 14).

Insbesondere bevorzugt ist Käsearoma der Geschmacksrichtung "Parmesan" mit folgender Zusammensetzung. Käsearoma "Parmesan" nach Anspruch 1, enthaltend an flüchtigen Komponenten 5 bis 75 Gew.-Teile an Verbindungen mit säuerlichen und Essigsäure-ähnlichen Noten (Gruppe 1), 0,2 bis 5,0 Gew.-Teile an Verbindungen mit milchartigen und cremigen Noten oder sahneartigen oder karamelartigen Noten (Gruppe 2), 0,2 bis 3,0 Gew.-Teile an Verbindungen mit fruchtigen und blumigen Noten (Gruppe 3), 0,1 bis 2,6 Gew.-Teile an Verbindungen mit scharfen Noten, Blauschimmel-Noten und Rinden-Noten (Gruppe 4), 0,04 bis 0,8 Gew.-Teile an Verbindungen mit fettartigen Noten (Gruppe 5), 0,001 bis 0,02 Gew.-Teile an Verbindungen mit animalischen Noten (Gruppe 6), 0,03 bis 0,5 Gew.-Teile an Verbindungen mit röstigen Noten und kakaoähnlichen Noten auch rauchigen Noten (Gruppe 7), 0,0005 bis 0,006 Gew.-Teile an Verbindungen mit gemüseähnlichen Noten (Gruppe 8), 0 bis 0,014 Gew.-Teile an pilzähnlichen Noten oder Weichkäse-ähnlichen Noten (Gruppe 9) und an nicht-flüchtigen Komponenten 200 bis 350 Gew.-Teile an Verbindungen mit dem Geschmackseindruck salzig (Gruppe 10), 200 bis 400 Gew.-Teile an Verbindungen mit dem Geschmackseindruck sauer (Gruppe 11), 70 bis 200 Gew.-Teile an Verbindungen mit adstringierenden, bitteren Noten (Gruppe 12), 20 bis 100 Gew.-Teile an Verbindungen mit dem Geschmackseindruck süß (Gruppe 13) und 0 bis 100 Gew.-Teile an Verbindungen mit einem Glutamat-artigen Geschmackseindruck (Umami) (Gruppe 14).

Das erfindungsgemäße Käsearoma wird durch Mischen der einzelnen Verbindungen aus den einzelnen Gruppen hergestellt.

Bevorzugt stellt man eine Vormischung aus den flüchtigen Komponenten und den nicht-flüchtigen Komponenten her und mischt diese bei der Herstellung des zu aromatisierenden Lebensmittels.
Gegenstand der Erfindung ist auch die Verwendung des erfindungsgemäßen Käsearomas in Lebensmitteln. Auf diese Weise wird in dem Lebensmittel das Geschmackserlebnis "Käse" hervorgerufen.

Gegenstand der Erfindung sind auch Lebensmittel die das erfindungsgemäße Käsearoma enthalten.

Beispielsweise seien die folgenden Anwendungsgebiete in Lebensmittel genannt:

| Anwendungsgebiete | Anwendungsformen | Technologie | Endprodukt |
|---|---|---|---|
| Snacks | Gewürzzubereitungen, Gewürzpräparate, Gewürzsalze, Präparate mit würzenden Zutaten, Gewürzaromazubereitungen, Gewürzaromasalze, Würzen, Würzmischungen, Würzsoßen, Trockenmischungen | Aufstreuwüze, Öl-Slurry, Fettfüllung, Teigaromatisierung | Kartoffel-Maischips, Extrudate, Pellets, Popcorn |
| Dauerbackwaren | Aroma, Gewürzzubereitungen, Gewürzpräparate, Gewürzsalze, Präparate mit würzenden Zutaten, Gewürzaromazubereitungen, Gewürzaromasalze, Würzen, Würzmischungen, Würzsoßen | Teigaromatisierung, Öl-Slurry, Fettfüllung, Aufstreuwürze | Kräcker, Kekse |
| Fertiggericht/ Saucen | Trockenmischungen, Konserven, Gewürzzubereitungen, Gewürzpräparate, Gewürzsalze, Präparate mit würzenden Zutaten, Gewürzaromazubereitungen, Gewürzaromasalze, Würzen, Würzmischungen, Würzsoßen | Instant-Trockenmischung, UHT-Behandlung, Sterilisierung | Fertigsuppe, Fertigsauce |
| Käsepasten | Aroma, Gewürzzubereitungen, Gewürzpräparate, Gewürzsalze, Präparate mit würzenden Zutaten, Gewürzaromazubereitungen, Gewürzaromasalze, Würzen, Würzmischungen, Würzsoßen | Instant-Trockenmischung, UHT-Behandlung, Sterilisierung | Brotaufstrich, vegetabiler Käse, Imitation Cheese, Process Cheese |

Bei Snacks handelt es sich um salzige Knabberartikel, die u.a. Kartoffel-Maischips, Extrudate, Pellets, Popcorn, Laugengebäck und in Fett und im Ofen ausgebackene Teigprodukte umfassen. Das erfindungsgemäße Käsearoma wird zur Benutzung oder Abrundung der Snacks verwendet. Die Applikation des Käsearomas kann über Aufstreuwürze, aufgesprühte Öl-Slurry, Fettfüllung oder Teigaromatisierung erfolgen. Bei den verschiedenen Würzformen werden "Träger" wie Streuwürzung und Öl-Slurry mit dem Käsearoma versetzt.

Kräcker sind gebackene Teigprodukte und gehören zu den würzigen Knabberartikeln; sie werden über Aufsprühen einer Öl-Slurry oder über eine Fettfüllung aromatisiert.

Convenienceprodukte wie Fertiggerichte, Teilgerichte, Saucen, Dressings und Dips werden in verschiedenen Formen angeboten. Üblich sind die trockenen, sterilisierten, pasteurisierten, gekühlten und tiefgekühlten Anwendungsformen.

Das Käsearoma kann bei allen Anwendungsformen entweder über eine trockene, pastöse oder flüssige Vormischung zugegeben werden oder auch als solches, ohne vorher mit den anderen Bestandteilen vermischt worden zu sein. Der Zeitpunkt der Zugabe ist abhängig von der Anwendungsform und dem Herstellungsverfahren.

Bei trockenen, Instant-Produkten handelt es sich um reine Trockenmischungen von Lebensmitteln, Lebensmittelzubereitungen, Zusatzstoffen, Hilfsmitteln und/oder Aromen.

Sterilisierte Produkte sind lange haltbare Produkte mit einem höheren Wassergehalt, der es erfordert, dass die Produkte über einen Erhitzungsprozess haltbar gemacht werden. Hierbei müssen sowohl die Lebendkeime als auch die Sporen abgetötet werden.

Pasteurisierte Produkte haben ebenfalls einen höheren Wassergehalt, der in der Regel dem Wassergehalt des Produktes entspricht. Diese werden auf verschiedene Arten haltbar gemacht. Die Haltbarmachung kann durch Erhitzen, niedrigen pH-Wert, Osmose (Einsatz von Zucker-Salz), Konservierungsstoffe und/oder Kühlung erfolgen.

Weitere Anwendungsformen sind Processed Cheese (Schmelzkäse) und Imitation Cheese (rekombinierter Käse aus Eiweiß, Fett, Wasser und Stabilisatoren).

Für die erfindungsgemäßen Käsearomen werde keine Zusatz- und Füllstoffe benötigt. Die notwendigen Aromastoffe lassen sich frei aus den einzelnen Gruppen kombinieren und ermöglichen auf diese Weise die Herstellung anwendungsspezifischer Mischungen.

Die erfindungsgemäßen Käsearomen ermöglichen überraschenderweise die Bereitstellung aller sortentypischer Geschmacksnoten ohne an Bestandteile gebunden zu sein, die nicht zu dem Geschmackserlebnis "Käse" beitragen.

In einer bevorzugten Ausführungsform der Erfindung wird eine Vormischung A, bestehend aus Bestandteilen der Gruppen 1 bis 9, mit einer Vormischung B, bestehend aus Bestandteilen der Gruppen 10 bis 14, kombiniert. Dabei kann Vormischung A in flüssiger Form sowie in formulierter Form wie zum Beispiel in sprühgetrockneter oder vekapselter Form vorliegen.

Die Herstellung von industriellen Käsezubereitungen mit erfindungsgemäßem Käsearoma erfolgt mit Inhaltstoffen der Gruppen 1 bis 14. Die Masse für industrielle Käsezubereitungen auf Pflanzenfettbasis kann nach der Rezeptur in der folgenden Tabelle zubereitet werden.

| Rezepturbeispiel für die Herstellung von industriellen Käsezubereitungen: (Angaben in Prozent) | | |
|---|---|---|
| Zutaten | min. | max. |
| Wasser | 60 | 65 |
| gehärtetes Fett | 20 | 23 |
| Phosphate E450c, E450a | 1,8 | 2,2 |
| granuliertes Milcheiweiß | 11 | 12 |
| Natriumchlorid | 0,5 | 0,6 |
| Citronensäure | 0,4 | 0,5 |
| ß-Carotin | 0,05 | 0,06 |

Hier wird Vormischung A, bestehend aus Bestandteilen der Gruppen 1 bis 9, mit Vormischung B, bestehend aus Bestandteilen der Gruppen 10 bis 14 kombiniert. Das Mischungsverhältnis des erfindungsgemäßen Käsearomas beträgt 20 bis 30 Teile der Vormischung A im Verhältnis zu 600 bis 800 Teilen der Vormischung B. Die gesamte Aromamischung wird in einem Anteil von 0,01 bis 10 % der Grundrezeptur zugegeben, vorzugsweise erfolgt eine Dosierung in dem Bereich von 0,1 bis 3 %.

Gegenstand der Erfindung sind auch Lebensmittel, die das erfindungsgemäße Käsearoma enthalten wie beispielsweise Brotaufstrichmassen oder Füllungen für Backwaren.

Die Herstellung von industriellen Backwaren vom Typ Kräcker mit erfindungsgemäßem Käsearoma erfolgt mit Inhaltstoffen der Gruppen 1 bis 14. Die Masse für Kräcker kann nach der Rezeptur in der folgenden Tabelle zubereitet werden.

| Rezepturbeispiel für die Herstellung von Kräcker (Angaben in Prozent): | | |
|---|---|---|
| Zutaten | min. | max. |
| Weizenmehl | 60 | 63 |
| Backpulver | 1,0 | 1,5 |
| Pflanzenweichfett | 6,0 | 6,5 |
| Maltosesirup | 2,0 | 2,5 |
| Emulgator | 1,2 | 1,8 |
| Sprühmagermilchpulver | 1,0 | 1,5 |
| Ammoniumbicarbonat | 1,5 | 2,0 |
| Backfrischhefe | 0,3 | 0,9 |
| Speisesalz | 0,3 | 0,6 |
| Schüttwasser | 20,0 | 23,5 |

Hier wird Vormischung A, bestehend aus Bestandteilen der Gruppen 1 bis 9, mit Vormischung B, bestehend aus Bestandteilen der Gruppen 10 bis 14 kombiniert. Das Mischungsverhältnis des erfindungsgemäßen Käsearomas in Dauerbackwaren und insbesondere Kräcker beträgt 150 bis 220 Teile der Vormischung A im Verhältnis zu 170 bis 250 Teilen der Vormischung B. Die gesamte Aromamischung wird in einem Anteil von 0,05 bis 10 % der Grundrezeptur zugegeben, vorzugsweise erfolgt eine Dosierung in dem Bereich von 0,5 bis 5 %

Die Herstellung von industriellen Aufstreuwürzungen (Seasonings) für Knabberartikel (Snacks) mit erfindungsgemäßem Käsearoma erfolgt mit Inhaltstoffen der Gruppen 1 bis 14. Die Masse für Seasonings kann nach der Rezeptur in der folgenden Tabelle zubereitet werden.

| Rezepturbeispiel für die Herstellung von Seasonings (Angaben in Prozent): | | |
|---|---|---|
| Zutaten | min. | max. |
| Salz | 12 | 25 |
| Träger (z.B. Molkenpulver) | 40 | 60 |
| Füllstoffe (z.B. Fettpulver) | 5 | 15 |
| Geschmacksverstärker | 1,8 | 3,8 |
| technologische Hilfsmittel (z.B. Kieselsäure) | 0,1 | 5 |
| Käsepulver | 10 | 50 |
| hydrolysierte pflanzliche Proteine | 5 | 10 |
| Hefe-Extrakt | 5 | 15 |
| Gewürze | 1 | 5 |
| Säuerungsmittel (z.B. Citronensäure) | 0,1 | 1,0 |
| Farbe (z.B. Paprika-Extrakt) | 0,1 | 1,0 |

Hier wird Vormischung A, bestehend aus Bestandteilen der Gruppen 1 bis 9, mit Vormischung B, bestehend aus Bestandteilen der Gruppen 10 bis 14 kombiniert. Das Mischungsverhältnis des erfindungsgemäßen Käsearomas in Dauerbackwaren und insbesondere Kräcker beträgt 5 bis 100 Teile der Vormischung A im Verhältnis zu 130 bis 500 Teilen der Vormischung B. Die gesamte Aromamischung wird in einem Anteil von 1,0 bis 20 % der Grundrezeptur zugegeben, vorzugsweise erfolgt eine Dosierung in dem Bereich von 5 bis 15 %

## Patentansprüche

1. Käsearoma, enthaltend an flüchtigen Komponenten 5 bis 200 Gew.-Teile an Verbindungen mit säuerlichen und Essigsäure-ähnlichen Noten (Gruppe 1), 0,1 bis 10,0 Gew.-Teile an Verbindungen mit milchartigen und cremigen Noten oder sahneartigen oder karamelartigen Noten (Gruppe 2), 0,03 bis 6,0 Gew.-Teile an Verbindungen mit fruchtigen und blumigen Noten (Gruppe 3), 0,01 bis 15,0 Gew.-Teile an Verbindungen mit scharfen Noten, Blauschimmel-Noten und Rinden-Noten (Gruppe 4), 0,003 bis 15,0 Gew.-Teile an Verbindungen mit fettartigen Noten (Gruppe 5), 0 bis 0,05 Gew.-Teile an Verbindungen mit animalischen Noten (Gruppe 6), 0,0003 bis 0,6 Gew.-Teile an Verbindungen mit röstigen Noten und kakaoähnlichen Noten auch rauchigen Noten (Gruppe 7), 0,00005 bis 0,1 Gew.-Teile an Verbindungen mit gemüseähnlichen Noten (Gruppe 8), 0 bis 0,1 Gew.-Teile an verbindungen mit pilzähnlichen Noten oder Weichkäse-ähnlichen Noten (Gruppe 9) und an nicht-flüchtigen Komponenten 100 bis 480 Gew.-Teile an Verbindungen mit dem Geschmackseindruck salzig (Gruppe 10), 50 bis 550 Gew.-Teile an Verbindungen mit dem Geschmackseindruck sauer (Gruppe 11), 5 bis 200 Gew.-Teile an Verbindungen mit adstringierenden, bitteren Noten (Gruppe 12), 0 bis 100 Gew.-Teile an Verbindungen mit dem Geschmackseindruck süß (Gruppe 13) und 0 bis 140 Gew.-Teile an Verbindungen mit einem Glutamat-artigen Geschmackseindruck (Umami) (Gruppe 14).

2. Käsearoma nach Anspruch 1, mit der Geschmacksrichtung "Cheddar" enthaltend an flüchtigen Komponenten 20 bis 200 Gew.-Teile an Verbindungen mit säuerlichen und Essigsäure-ähnlichen Noten (Gruppe 1), 0,5 bis 10 Gew.-Teile an Verbindungen mit milchartigen und cremigen Noten oder sahneartigen oder karamelartigen Noten (Gruppe 2), 0,1 bis 2,0 Gew.-Teile an Verbindungen mit fruchtigen und blumigen Noten (Gruppe 3), 0,05 bis 0,8 Gew.-Teile an Verbindungen mit scharfen Noten, Blauschimmel-Noten und Rinden-Noten (Gruppe 4), 0,04 bis 1,0 Gew.-Teile an Verbindungen mit fettartigen Noten (Gruppe 5), 0,0001 bis 0,005 Gew.-Teile an Verbindungen mit animalischen Noten (Gruppe 6), 0,002 bis 0,2 Gew.-Teile an Verbindungen mit röstigen Noten und kakaoähnlichen Noten auch rauchigen Noten (Gruppe 7), 0,001 bis 0,06 Gew.-Teile an Verbindungen mit gemüseähnlichen Noten (Gruppe 8), 0,001 bis 0,08 Gew.-Teile an pilzähnlichen Noten oder Weichkäse-ähnlichen Noten (Gruppe 9) und an nicht-flüchtigen Komponenten 100 bis 350 Gew.-Teile an Verbindungen mit dem Geschmackseindruck salzig (Gruppe 10), 80 bis 280 Gew.-Teile an Verbindungen mit dem Geschmackseindruck sauer (Gruppe 11), 5 bis 40 Gew.-Teile an Verbindungen mit adstringierenden, bitteren Noten (Gruppe 12), 0 bis 50 Gew.-Teile an Verbindungen mit dem Geschmackseindruck süß (Gruppe 13) und 0 bis 80 Gew.-Teile an Verbindungen mit einem Glutamat-artigen Geschmackseindruck (Umami) (Gruppe 14).

3. Käsearoma nach Anspruch 1 mit der Geschmacksrichtung "Parmesan" enthaltend an flüchtigen Komponenten 5 bis 75 Gew.-Teile an Verbindungen mit säuerlichen und Essigsäure-ähnlichen Noten (Gruppe 1), 0,2 bis 5,0 Gew.-Teile an Verbindungen mit milchartigen und cremigen Noten oder sahneartigen oder karamelartigen Noten (Gruppe 2), 0,2 bis 3,0 Gew.-Teile an Verbindungen mit fruchtigen und blumigen Noten (Gruppe 3), 0,1 bis 2,6 Gew.-Teile an Verbindungen mit scharfen Noten, Blauschimmel-Noten und Rinden-Noten (Gruppe 4), 0,04 bis 0,8 Gew.-Teile an Verbindungen mit fettartigen Noten (Gruppe 5), 0,001 bis 0,02 Gew.-Teile an Verbindungen mit animalischen Noten (Gruppe 6), 0,03 bis 0,5 Gew.-Teile an Verbindungen mit röstigen Noten und kakaoähnlichen Noten auch rauchigen Noten (Gruppe 7), 0,0005 bis 0,006 Gew.-Teile an Verbindungen mit gemüseähnlichen Noten (Gruppe 8), 0 bis 0,014 Gew.-Teile an pilzähnlichen Noten oder Weichkäse-ähnlichen Noten (Gruppe 9) und an nicht-flüchtigen Komponenten 200 bis 350 Gew.-Teile an Verbindungen mit dem Geschmackseindruck salzig (Gruppe 10), 200 bis 400 Gew.-Teile an Verbindungen mit dem Geschmackseindruck sauer (Gruppe 11), 70 bis 200 Gew.-Teile an Verbindungen mit adstringierenden, bitteren Noten (Gruppe 12), 0 bis 100 Gew.-Teile an Verbindungen mit dem Geschmackseindruck süß (Gruppe 13) und 20 bis 100 Gew.-Teile an Verbindungen mit einem Glutamat-artigen Geschmackseindruck (Umami) (Gruppe 14).

4. Käsearoma nach den Ansprüchen 1, 2 und 3 **dadurch gekennzeichnet, dass** als Geschmacksverstärker und zur Abrundung Hefe-Extrakt und/oder Milchfett-oder Pflanzenfettprodukte zugegeben werden.

5. Verwendung von Käsearomen nach den Ansprüchen 1 bis 4 zum Aromatisieren von Lebensmitteln.

6. Verwendung nach Anspruch 5, **dadurch gekennzeichnet, dass** das Käsearoma auf einen Träger aufgebracht und zum Aromatisieren von Lebensmitteln verwendet wird.

7. Lebensmittel, enthaltend Käsearoma nach den Ansprüchen 1 bis 4.

## Claims

1. Cheese flavouring comprising as volatile components from 5 to 200 parts by weight of compounds having sour and acetic-acid-like notes (group 1), from 0.1 to 10.0 parts by weight of compounds having milky and creamy notes or cream-like or caramel-like notes (group 2), from 0.03 to 6.0 parts by weight of compounds having fruity and flowery notes (group 3), from 0.01 to 15.0 parts by weight of compounds having sharp notes, blue mould notes and rind-like notes (group 4), from 0.003 to 15.0 parts by weight of compounds having fat-like notes (group 5), from 0 to 0.05 parts by weight of compounds having animal notes (group 6), from 0.0003 to 0.6 part by weight of compounds having roasted notes and cocoa-like notes as well as smoky notes (group 7), from 0.00005 to 0.1 part by weight of compounds having vegetable-like notes (group 8), from 0 to 0.1 part by weight of compounds having mushroom-like notes or soft-cheese-like notes (group 9), and as non-volatile components from 100 to 480 parts by weight of compounds having the taste impression salty (group 10), from 50 to 550 parts by weight of compounds having the taste impression sour (group 11), from 5 to 200 parts by weight of compounds having astringent, bitter notes (group 12), from 0 to 100 parts by weight of compounds having the taste impression sweet (group 13) and from 0 to 140 parts by weight of compounds having a glutamate-like taste impression (umami) (group 14).

2. Cheese flavouring according to claim 1 having a "Cheddar" taste, comprising as volatile components from 20 to 200 parts by weight of compounds having sour and acetic-acid-like notes (group 1), from 0.5 to 10 parts by weight of compounds having milky and creamy notes or cream-like or caramel-like notes (group 2), from 0.1 to 2.0 parts by weight of compounds having fruity and flowery notes (group 3), from 0.05 to 0.8 parts by weight of compounds having sharp notes, blue mould notes and rind-like notes (group 4), from 0.04 to 1.0 part by weight of compounds having fat-like notes (group 5), from 0.0001 to 0.005 part by weight of compounds having animal notes (group 6), from 0.002 to 0.2 part by weight of compounds having roasted notes and cocoa-like notes as well as smoky notes (group 7), from 0.001 to 0.06 part by weight of compounds having vegetable-like notes (group 8), from 0.001 to 0.08 part by weight of mushroom-like notes or soft-cheese-like notes (group 9), and as non-volatile components from 100 to 350 parts by weight of compounds having the taste impression salty (group 10), from 80 to 280 parts by weight of compounds having the taste impression sour (group 11), from 5 to 40 parts by weight of compounds having astringent, bitter notes (group 12), from 0 to 50 parts by weight of compounds having the taste impression sweet (group 13) and from 0 to 80 parts by weight of compounds having a glutamate-like taste impression (umami) (group 14).

3. Cheese flavouring according to claim 1 having a "Parmesan" taste, comprising as volatile components from 5 to 75 parts by weight of compounds having sour and acetic-acid-like notes (group 1), from 0.2 to 5.0 parts by weight of compounds having milky and creamy notes or cream-like or caramel-like notes (group 2), from 0.2 to 3.0 parts by weight of compounds having fruity and flowery notes (group 3), from 0.1 to 2.6 parts by weight of compounds having sharp notes, blue mould notes and rind-like notes (group 4), from 0.04 to 0.8 part by weight of compounds having fat-like notes (group 5), from 0.001 to 0.02 part by weight of compounds having animal notes (group 6), from 0.03 to 0.5 part by weight of compounds having roasted notes and cocoa-like notes as well as smoky notes (group 7), from 0.0005 to 0.006 part by weight of compounds having vegetable-like notes (group 8), from 0 to 0.014 part by weight of mushroom-like notes or soft-cheese-like notes (group 9), and as non-volatile components from 200 to 350 parts by weight of compounds having the taste impression salty (group 10), from 200 to 400 parts by weight of compounds having the taste impression sour (group 11), from 70 to 200 parts by weight of compounds having astringent, bitter notes (group 12), from 0 to 100 parts by weight of compounds having the taste impression sweet (group 13) and from 20 to 100 parts by weight of compounds having a glutamate-like taste impression (umami) (group 14).

4. Cheese flavouring according to claims 1, 2 and 3, **characterised in that** yeast extract and/or milk fat or vegetable fat products are added as flavour enhancers and for the purpose of rounding.

5. Use of cheese flavourings according to claims 1 to 4 in the flavouring of foodstuffs.

6. Use according to claim 5, **characterised in that** the cheese flavouring is applied to a carrier and used in the flavouring of foodstuffs.

7. Foodstuffs containing cheese flavouring according to claims 1 to 4.

## Revendications

1. Arôme de fromage, contenant comme composants volatils 5 à 200 parties en poids de composés de notes acidulées et vinaigrées (groupe 1), 0,1 à 10 parties en poids de composés de notes laiteuses et onctueuses ou de notes crémeuses ou de caramel (groupe 2), 0,03 à 6,0 parties en poids de composés de notes fruitées et de fleurs (groupe 3), 0,01 à 15 parties en poids de composés de notes fortes, de notes de moisissures bleues et de notes de croûte (groupe 4), 0,003 à 15 parties en poids de composés de notes grasses (groupe 5), 0 à 0,05 parties en poids de composés de notes animales (groupe 6), 0,0003 à 0,6 parties en poids de composés de notes grillées et de cacao, également fumées (groupe 7), 0,00005 à 0,1 parties en poids de composés de notes de légumes (groupe 8), 0 à 0,1 parties en poids de composés de notes de champignons ou de fromage mou (groupe 9) et, comme composants non volatils, 100 à 480 parties en poids de composés à impression gustative salée (groupe 10), 50 à 550 parties en poids de composés à impression gustative acide (groupe 11), 5 à 200 parties en poids de composés de note astringente, amère (groupe 12), 0 à 100 parties en poids de composés à impression gustative sucrée (groupe 13) et 0 à 140 parties en poids de composés à impression gustative de glutamate (Umami) (groupe 14).

2. Arôme de fromage selon la revendication 1, avec la tendance gustative « Cheddar », contenant comme composants volatils 20 à 200 parties en poids de composés de notes acidulées et vinaigrées (groupe 1), 0,5 à 10 parties en poids de composés de notes laiteuses et onctueuse ou de notes crémeuses ou de caramel (groupe 2), 0,1 à 2,0 parties en poids de composés de notes fruitées et de fleurs (groupe 3), 0,05 à 0,8 parties en poids de composés de notes fortes, de notes de moisissures bleues et de notes de croûtes (groupe 4), 0,04 à 1,0 parties en poids de composés de notes grasses (groupe 5), 0,0001 à 0,005 parties en poids de composés de notes animales (groupe 6), 0,002 à 0,2 parties en poids de composés de notes grillées et de cacao, également fumées (groupe 7), 0,001 à 0,06 parties en poids de composés de notes de légumes (groupe 8), 0,001 à 0,08 parties en poids de composés de notes de champignons ou de fromage mou (groupe 9) et, comme composants non volatils, 100 à 350 parties en poids de composés à impression gustative salée (groupe 10), 80 à 280 parties en poids de composés à impression gustative acide (groupe 11), 5 à 40 parties en poids de composés de note astringente, amère (groupe 12), 0 à 50 parties en poids de composés à impression gustative sucrée (groupe 13) et 0 à 80 parties en poids de composés à impression gustative de glutamate (Umami) (groupe 14).

3. Arôme de fromage selon la revendication 1, avec la tendance gustative « Parmesan », contenant comme composants volatils 5 à 75 parties en poids de composés de notes acidulées et vinaigrées (groupe 1), 0,2 à 5 parties en poids de composés de notes laiteuses et onctueuses ou de notes crémeuses ou de caramel (groupe 2), 0,2 à 3,0 parties en poids de composés de notes fruitées et de fleurs (groupe 3), 0,1 à 2,6 parties en poids de composés de notes fortes, de notes de moisissures bleues et de notes de croûtes (groupe 4), 0,04 à 0,8 parties en poids de composés de notes grasses (groupe 5), 0,001 à 0,02 parties en poids de composés de notes animales (groupe 6), 0,03 à 0,5 parties en poids de composés de notes grillées et de cacao, également fumées (groupe 7), 0,0005 à 0,006 parties en poids de composés de notes de légumes (groupe 8), 0 à 0,014 parties en poids de composés de notes de champignons ou de fromage mou (groupe 9) et, comme composants non volatils, 200 à 350 parties en poids de composés à impression gustative salée (groupe 10), 200 à 400 parties en poids de composés à impression gustative acide (groupe 11), 70 à 200 parties en poids de composés de note astringente, amère (groupe 12), 0 à 100 parties en poids de composés à impression gustative sucrée (groupe 13) et 20 à 100 parties en poids de composés à impression gustative de glutamate (Umami) (groupe 14).

4. Arôme de fromage selon les revendications 1, 2 et 3, **caractérisé en ce que**, comme agent de sapidité et comme complément, des extraits de levure et/ou des produits de graisses de lait ou de graisses végétales sont ajoutés.

5. Utilisation d'arômes de fromage selon les revendications 1 à 4 pour aromatiser des denrées alimentaires.

6. Utilisation selon la revendication 5, **caractérisée en ce que** l'arôme de fromage soit déposé sur un support et est utilisé pour aromatiser des denrées alimentaires.

7. Denrées alimentaires contenant de l'arôme de fromage selon les revendications 1 à 4.
